# FASCICULE DE BREVET EUROPEEN

(11) **EP 0 372 448 B1**
(45) Date de publication et mention de la délivrance du brevet: **08.06.1994**
(21) Numéro de dépôt: 89122313.3
(22) Date de dépôt: 04.12.1989
(51) Int. Cl.: G02B 6/42, G02F 1/09

(54) **Tête optique à isolateur intégré pour le couplage d'un laser semi-conducteur à un guide de lumière**
Optisches Modul mit integriertem Isolator für die Kopplung eines Halbleiterlasers an einen Wellenleiter
Optical module with an integrated isolator for coupling a semiconductor laser to a light guide

(30) Priorité: 09.12.1988 FR 8816221; 26.07.1989 FR 8910057
(43) Date de publication de la demande: 13.06.1990
(73) Titulaire: ALCATEL CIT, 75008 Paris (FR)
(72) Inventeur: Grard, Emmanuel, F-91240 Saint Michel sur Orge (FR); Mousseaux, Daniel, F-91120 Palaiseau (FR); Beylat, Jean-Luc, F-75015 Paris (FR); Auge, Jacques, F-91530 Saint Cheron (FR); Guerin, Jean-Jacques, F-91650 Breuillet (FR); Duda, Eugène, F-91140 Villebon-sur-Yvette (FR)
(74) Mandataire: Weinmiller, Jürgen

(56) Documents cités:
- EP-A- 0 283 227
- ELECTRONICS LETTERS, vol. 23, no. 5, 26 février 1987, pages 203-205, Stevenage, Herts, GB; K. MATSUDA et al.: "Low-noise LD module with an optical isolator using a highly Bi-substituted garnet film"
- PATENT ABSTRACTS OF JAPAN, vol. 10, no. 38 (P-428)[2095], 14 février 1986; & JP-A-60 184 225
- PATENT ABSTRACTS OF JAPAN, vol. 10, no. 344 (P-518)[2400], 20 novembre 1986; & JP-A-61 147 224

## Description

La présente invention concerne une tête optique comportant un laser semi-conducteur et assurant son couplage à un guide de lumière. On considérera plus particulièrement ci-après le cas où le guide à coupler est constitué par une fibre optique. Dans ce cas la fibre à coupler est typiquement une fibre monomode.

De telles têtes sont essentiellement utilisées dans le domaine des télécommunication pour la réalisation des réseaux de transmission à fibres optiques. De nombreuses expériences ont été menées dans les grands laboratoires de recherche sur ces réseaux. Elles ont notamment porté sur les réseaux à détection cohérente et elles ont démontré que de tels réseaux présentaient divers avantages par rapport aux réseaux à détection directe :
- un budget énergétique amélioré permettant d'augmenter les portées des liaisons point à point ou le nombre de stations raccordées sur un réseau,
- la possibilité de réaliser un multiplexage plus dense en longueur d'onde, ce qui permet d'augmenter la capacité de transmission de la fibre ou du réseau.

Pour permettre d'obtenir de tels avantages, les sources optoélectroniques utilisées dans ces réseaux doivent avoir des performances élevées. En particulier leur largeur de raie doit être très faible. C'est pourquoi ces sources sont actuellement constituées par des lasers à résonateurs distribués dit "laser DFB". Malheureusement ces derniers présentent une sensibilité dommageable à des réflexions optiques parasites difficilement évitables telles que par exemple, la rétrodiffusion dans la fibre et des réflexions au niveau de connexions non optimisées. Les réalimentations optiques résultant de ces réflexions peuvent perturber des caractéristiques essentielles de la source telles que la monochromaticité, le bruit d'intensité relative (RIN) etc... ce qui peut pénaliser le système, voir même en empêcher le bon fonctionnement (taux d'erreurs asymptotique supérieur à 10⁻⁹).

Pour éviter ces inconvénients, une disposition connue consiste à intégrer dans la tête un isolateur optique propre à arrêter la lumière qui résulte des réflexions parasites.

Une première tête optique connue utilisant cette disposition comporte certains éléments qui lui sont communs avec une tête selon l'invention et qui vont d'abord être indiqués :
- un boîtier présentant une direction longitudinale avec un côté avant et un côté arrière,
- ledit laser semi-conducteur disposé dans ce boîtier, pour émettre selon cette direction longitudinale vers l'avant un faisceau de lumière utile présentant un plan de polarisation orienté selon un plan dit plan de polarisation de laser,
- un rotateur de polarisation disposé dans ce boîtier en avant de ce laser pour faire tourner de 45 degrés environ dans un sens le plan de polarisation dudit faisceau de manière à orienter ce plan selon un plan de polarisation de sortie,
- une lentille de focalisation disposée dans ce boîtier en avant de ce rotateur pour injecter ce faisceau dans l'entrée d'une fibre optique à coupler,
- et un polariseur final disposé entre ladite lentille et ladite fibre à coupler, orienté selon ledit plan de polarisation de sortie de manière à laisser passer ladite lumière utile en provenance dudit laser et à polariser selon ce plan de polarisation de sortie toute lumière parasite réflèchie vers l'arrière pour que ledit rotateur fasse ensuite tourner le plan de polarisation de cette lumière parasite de 45 degrés environ dans ledit sens et qu'aucune telle lumière ne parvienne audit laser du moins avec un plan de polarisation parallèle audit plan de polarisation de laser.

Des têtes connues de ce genre sont décrites dans les articles suivants :
- Distibuted feedback laser diode (DFB-LD) to single-mode fiber coupling module with optical isolator for high bit rate modulation, TOSHIHIKO SUGIE and MASATOSHI SARUWATARI, Journal of lightware technology, vol. LT-4, No 2. february 1986,
- Low-noise LD module with an optical isolator using a highly bi-substituted garnet film, K.MATSUDA, H.MINEMOTO, K.TODA, O.KAMADA, S.ISHIZUKA, ELECTRONICS LETTERS 26th february 1987 vol. 23 No 5.

Un inconvénient de ces têtes connues est qu'elles sont constituées d'un système optique à quatre éléments (1ère lentille - rotateur-2ème lentille - polariseur) ou à trois éléments (lentille - rotateur - polariseur) insérés entre le laser et la fibre. Cela entraîne une grande difficulté de mise en oeuvre (positionnement et réglage de ces différentes pièces pour assurer une perte d'insertion minimum et une isolation suffisante).

Un autre inconvénient est que les nombreuses interfaces rencontrées par la lumière dans la tête optique tendent à augmenter la proportion de lumière réfléchie vers le laser.

La présente invention a notamment pour buts de simplifier la construction et le réglage d'une tête optique à isolateur intégré, et/ou de diminuer l'encombrement de cette tête ainsi que le nombre d'interfaces susceptibles de créer des rétroréflexions parasites.

Une tête optique selon l'invention comporte les éléments communs précédemment mentionnés et, dans les buts indiqués ci-dessus, elle est caractérisée par le fait que ledit polariseur final est un guide polariseur constitué par un tronçon de guide de lumière raccordé audit guide à coupler, la lumière étant injecteé par ladite lentille dans ledit guide polariseur final.

Ce guide polariseur est par exemple constitué par une fibre polariseur.

Cette fibre polariseur est de préférence fixée à une paroi avant dudit boîtier.

Une première tête optique peut être réalisée selon la présente invention en comportant seulement les éléments précédemment mentionnés, c'est-à-dire, notamment, un seul rotateur. Elle peut être utilisée avec avantage dans certains réseaux de transmission à détection cohérente.

Mais il doit être compris d'une part qu'une lumière parasite peut revenir vers le laser avec un plan de polarisation perpendiculaire à celui de ce laser qui peut y être un peu sensible, d'autre part que les rotateurs et polariseurs ne sont pas parfaits et laissent un peu de lumière revenir jusqu'au laser avec un plan de polarisation parallèle à celui de ce laser notamment en cas de variation de la température.

Or, dans les réseaux de transmission à détection cohérente, il est souvent nécessaire d'utiliser des sources optoélectroniques présentant des largeurs de raie particulièrement petites, inférieures ou égales à environ 1 MHz.

Pour obtenir une stabilité satisfaisante de ces largeurs de raie, une isolation optique particulièrement poussée est requise. Elle est typiquement supérieure à 35 dB. Dans certains cas 50 à 60 dB d'isolation peuvent être nécessaires.

C'est pourquoi une deuxième tête optique connue comporte, outre lesdits éléments communs, un deuxième rotateur précédé d'un polariseur intermédiaire. Ce dernier reçoit et transmet la lumière utile sortant du rotateur précédemment mentionné qui constitue alors un premier rotateur. Le deuxième rotateur fait tourner le plan de polarisation de la lumière de 45 degrés dans le même sens que le premier. Des têtes analogues à cette deuxième tête optique connue sont décrite dans les deux articles :
- "Extremely low noise characteristics of DFB laser module with doubled optical isolator scheme".
   T. UNO, K. FUJITO, S. ISHIZUKA et al.
   ECOC 88 - p. 223 - 226
- " Cascaded optical isolator configuration having high isolation characteristics over a wide temperature and wavelength range".
   KAZUO SHIRAISHI/SHOJIRO KAWAKAMI
   Optic letters - Vol. 12 n° 7 - pp. 462 - 464.

Elles peuvent comporter par exemple le laser, une première lentille de focalisation, le premier rotateur, au moins un polariseur intermédiaire, le deuxième rotateur, un polariseur final du même type que le polariseur intermédiaire, et une deuxième lentille de focalisation.

Une deuxième tête optique peut être réalisée selon la présente invention en comportant, comme cette deuxième tête optique connue, un deuxième rotateur précédé d'un polariseur intermédiaire, tout en présentant, par rapport à cette deuxième tête connue, les mêmes avantages que la première tête selon la présente invention par rapport à la première tête connue précédemment mentionnée.

L'invention sera mieux comprise à l'aide de la description qui est donnée ci-après à titre d'exemple non limitatif et à l'aide des figures annexées.

La figure 1 représente une vue de principe de la première tête connue précédemment mentionnée.

La figure 2 représente les éléments optiques d'une première tête selon l'invention.

La figure 3 représente une section droite de la fibre polariseur de cette dernière tête.

La figure 4 représente une section de cette même tête par un plan vertical longitudinal.

La figure 5 représente une vue de principe de la deuxième tête connue précédemment mentionnée.

La figure 6 représente une vue de principe de la deuxième tête selon l'invention précédemment mentionnée.

La figure 7 représente une section de cette dernière tête par un plan vertical longitudinal.

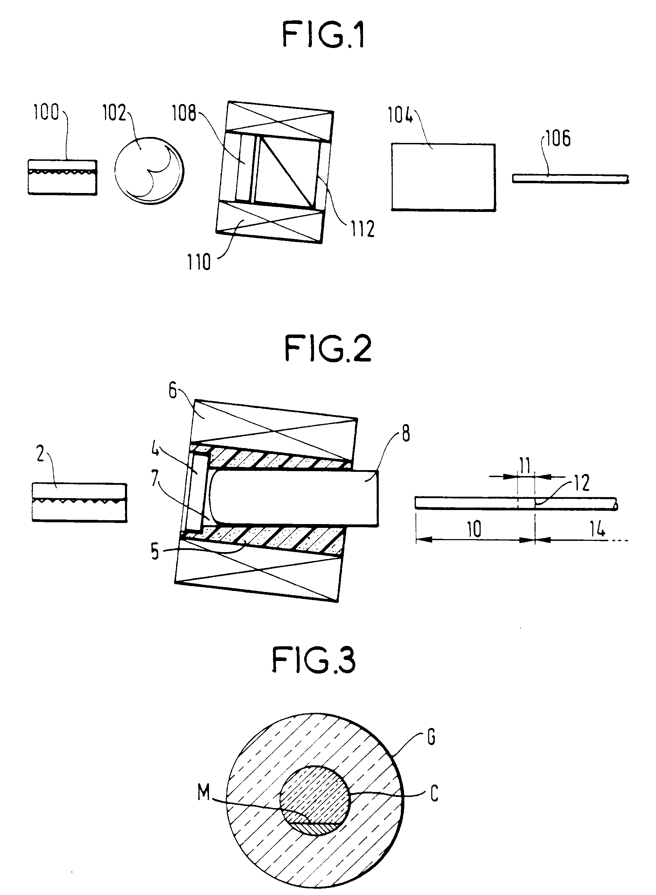

Comme représenté sur la figure 1, la première tête optique connue à isolateur intégré comporte les éléments suivants :
- Un laser DFB 100 polarisé en mode T.E.
- Une première optique de couplage 102 qui est une bille traitée antireflet dans le cas de la figure 1, et qui permet de rendre le faisceau parallèle (cette optique pourrait être également constituée d'une lentille à gradient d'indice).
- Une deuxième optique constituée par une lentille 104 et permettant de refocaliser la lumière dans le coeur d'une fibre optique monomode à coupler 106.
- Un rotateur de Faraday placé entre ces deux optiques et constitué lui-même d'un barreau de grenat d'ytrium et de fer (YIG) 108 par exemple, dont l'aimantation est saturée par un aimant permanent 110 dans la direction de propagation de la lumière.
- Un polariseur 112 du type dit "Banning" placé dans l'évidement axial de cet aimant à l'avant du barreau 108.

La figure 2 donne le schéma de principe de ladite première tête réalisée selon la présente invention. Cette tête comporte :
- un laser 2 du type DFB polarisé en mode TE
- un cristal rotateur 4 constitué d'une lame mince de composition (GdBi)₃ (FeAlGa) ₅O₁₂ pour l'utilisation avec une lumière de longueur d'onde égale à 1,3 micromètre et (YbTbBi) ₃Fe₅O₁₂ pour l'utilisation avec une lumière de longueur d'onde égale à 1,55 micromètre par exemple,
- un aimant permanent 6 qui a une forme tubulaire et qui est constitue de SmCo,
- une lentille de focalisation 8 de type à gradient d'indice,
- une fibre polariseur 10 raccordée (épissurée) par une soudure 12 à une fibre à coupler 14.

Ces éléments sont utilisés et disposés comme suit :
Le cristal rotateur 4 et l'aimant 6 constituent ledit rotateur qui est un rotateur de Faraday. Un évidement axial 7 de cet aimant s'étend selon ladite direction longitudinale. Ce cristal est fixé en regard du laser 2 dans une partie arrière d'un manchon 5 disposé dans cet évidement. La lentille de focalisation 8 est fixée dans une partie avant de ce manchon en regard de la fibre polariseur 10. Ce rotateur et cette lentille sont ainsi intégrés dans un bloc intermédiaire.

Le fonctionnement est le suivant :
La lumière polarisée émise par le laser 2 subit une rotation de 45° de son plan de polarisation à son passage dans le rotateur. La lentille 8 permet de former l'image de la tache laser sur la face d'entrée de la fibre polariseur qui est orientée de manière que son axe passant soit confondu avec le plan de polarisation de la lumière incidente.

La lumière réfléchie sur les premiers connecteurs ou en extrémité de ligne est polarisée après passage dans la fibre polariseur. Elle subit au passage du rotateur de Faraday une rotation de 45° de son plan de polarisation dans le même sens que précédemment, ce qui conduit à un retour de la lumière sur le laser en mode TM, configuration dans laquelle on n'observe pas de remontée de bruit.

Les caractéristiques des éléments utilisés sont les suivantes (à 1,3 micromètres) :
- Laser DFB ; taux d'extinction 25 dB
- Rotateur de Faraday
   - Taux d'extinction 40 dB
   - Perte d'insertion : 0,2 dB
   - Champ magnétique à saturation : 200 Oe
- Fibre polariseur :
   - Taux d'extinction 35 dB
   - Perte d'insertion 0,2 dB
- Perte d'insertion de l'épissure fibre polariseur - fibre à coupler : 0,3 dB.

Dans ces conditions, la perte de couplage typique est d'environ - 5 dB avec un laser semi-conducteur pour lequel, en champ lointain thêta parallèle = 25° et thêta perpendiculaire = 35°. Une isolation typique de 25 dB est obtenue.

Il a été montré dans ces conditions, que même sous une forte rétroaction externe (-14 dB), le plancher de bruit du laser (R.I.N) reste en-dessous de -135 dB/Hz, ce qui est une valeur compatible avec un fonctionnement à haut débit (taux d'erreur 10⁻⁹ à 2,3 Gb/s).

Conformément à la figure 3 la fibre polariseur 10 comporte un insert métallique M s'étendant entre son coeur C et sa gaîne optique G pour absorber les ondes présentant une polarisation perpendiculaire audit plan de polarisation de sortie. Pour permettre la réalisation de la soudure 12, cet insert est absent dans un tronçon avant 11 de cette fibre polariseur à proximité de cette soudure. Il semble de manière générale préférable que cet insert soit absent au voisinage d'une zone de raccordement optique même lorsque le raccordement est réalisé autrement que par soudure.

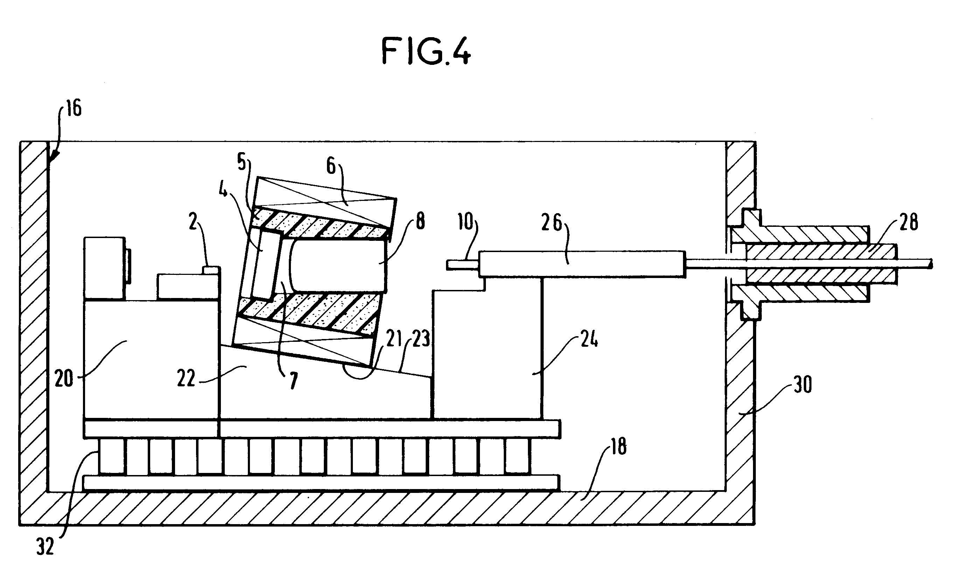

La figure 4 donne le mode d'insertion des éléments optiques dans un boîtier de tête optique 16. Ce boîtier comporte un plancher 18 sur lequel sont fixées d'arrière en avant :
- une palette laser 20 pour porter le laser 2,
- une palette intermédiaire 22 pour porter le bloc intermédiaire comportant les éléments 4, 5, 6 et 8,
- et une palette fibre 24 pour porter la fibre polariseur 10.
La palette intermédiaire 22 a une face supérieure 23 inclinée par rapport au plancher 18 et une face inférieure 21 du bloc intermédiaire s'appuie sur cette face. On donne ainsi aux faces principales de la lame 4 du rotateur une inclinaison pour éviter que des réflexions sur ces faces ne renvoient vers la plage d'émission du laser 2 une lumière susceptible de créer une rétroaction gênante.

L'assemblage s'effectue de la manière suivante, d'abord à l'extérieur du boîtier : la lentille 8 et le cristal rotateur 4 sont brasés dans le manchon 5 qui est lui-même introduit dans l'évidement 7 de l'aimant permanent 6. L'ensemble est fixé sur la palette intermédiaire 22 et celle-ci est fixée à la palette laser 20 portant le laser 2 après réglage contrôlé par mesure du couplage optique. Par ailleurs la fibre polariseur 10 est mise à l'intérieur d'un tube 26.

Les réglages se continuent alors de la manière suivante, une direction Z étant ladite direction longitudinale, et des directions X et Y deux directions transversales.

L'ensemble des palettes laser 20 et intermédiaire 22 est déplacé en X et Y par rapport à la palette fibre 24 à l'aide d'un micromanipulateur, toujours avec mesure de couplage optique. Quant au tube 26, il est placé dans une rainure en Vé de la palette fibre 24 et il est de même déplacé en Z et en rotation autour de son axe de direction Z.

Lorsqu'un optimum de couplage est obtenu, le tube 26 est soudé au laser YAG sur la palette fibre. Les palettes fibre et intermédiaire sont fixées en position optimale par soudure au laser YAG.

L'extrémité avant de la fibre 10 dépassant du tube 26 est alors fléchie et introduite à partir de l'intérieur du boîtier 16 dans un canon de sortie 28 traversant une paroi avant 30 de ce boîtier. Les palettes 20, 22 et 24 sont fixées au plancher 18 par exemple par l'intermédiaire d'un module de régulation thermique 32.

Le tube 26 porté par la palette 24 est suffisamment court pour être contenu dans le boîtier.

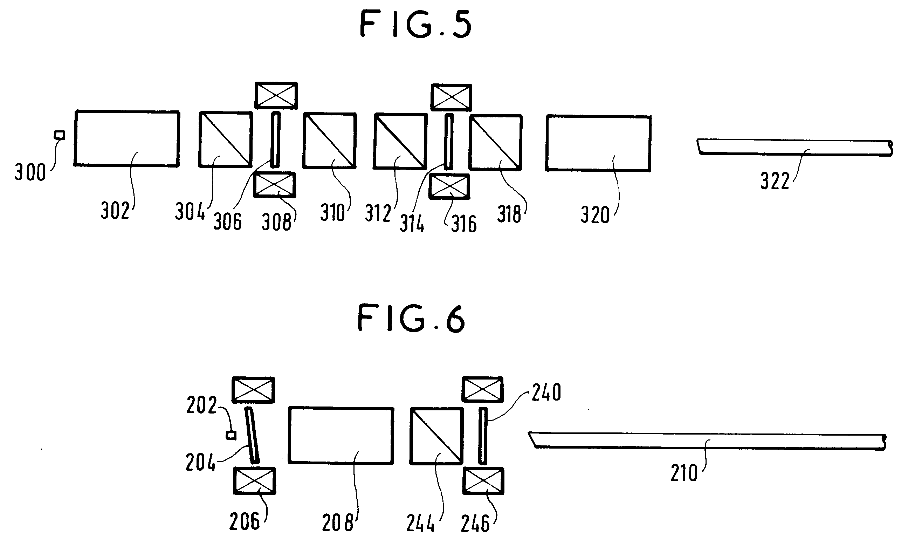

Conformément à la figure 5 la deuxième tête connue précédemment mentionnée comporte :
- un laser DFB 300,
- une première lentille 302,
- un premier polariseur 304,
- un premier rotateur de Faraday constitué d'une lame 306 soumise au champ d'un aimant permanent 308,
- un deuxième et un troisième polariseurs 310 et 312,
- un deuxième rotateur de Faraday constitué d'une lame 314 dans le champ d'un aimant 316,
- un quatrième polariseur 318,
- et une deuxième lentille de focalisation 320 permettant de refocaliser la lumière dans le coeur d'une fibre optique à coupler 322.

La deuxième tête selon l'invention est généralement analogue à la première, sauf la présence d'un deuxième rotateur et du polariseur intermédiaire. Conformément à la figure 6, elle comporte :
- un laser DFB 202 polarisé en mode TE,
- un premier rotateur de Faraday dont la lame cristalline 204 a la composition précédemment indiquée pour la lame 4, et est soumise au champ d'un aimant 206,
- une lentille de focalisation 208 à gradient d'indice,
- un polariseur intermédiaire 244 constitué par un mini polariseur de type "Banning", selon les demandes de brevets français EN 8804671 et américain SN 333151,
- un deuxième rotateur de Faraday semblable au premier avec une lame 240 et un aimant 246, et
- une fibre polariseur 210.

Le fonctionnement est le suivant :
Le faisceau de lumière polarisée émis par le laser subit une première rotation de 45° de son plan de polarisation après passage dans le premier rotateur 204, 206.
La lentille 208 permet de former l'image du spot laser sur la face d'entrée de la fibre polariseur 210. Le polariseur 244 de type "Banning" a son axe passant orienté sur la vibration issue du premier rotateur.
La lumière subit une deuxième rotation de polarisation au passage du second rotateur de Faraday 240, 246 (qui l'amène à 90° de son plan de polarisation initial).
La lumière est enfin focalisée sur la face d'entrée de la fibre polariseur, qui est orientée de manière à ce que son axe passant soit confondu avec le plan de polarisation de la lumière incidente. La lumière réfléchie sur les premiers connecteurs, ou en extrêmité de ligne, est polarisée après passage dans la fibre polariseur. Elle subit après passage du deuxième rotateur de Faraday une rotation de 45° de son plan de polarisation, dans le même sens que précédemment, ce qui oriente son plan de polarisation selon l'axe "bloquant" du polariseur 244. La lumière résiduelle dont le plan de polarisation est parallèle à l'axe passant du polariseur 244, voit son plan de polarisation tourné de nouveau de 45° et revient polarisée selon le mode TM du laser, configuration dans laquelle on observe une très faible sensibilité au bruit de phase.

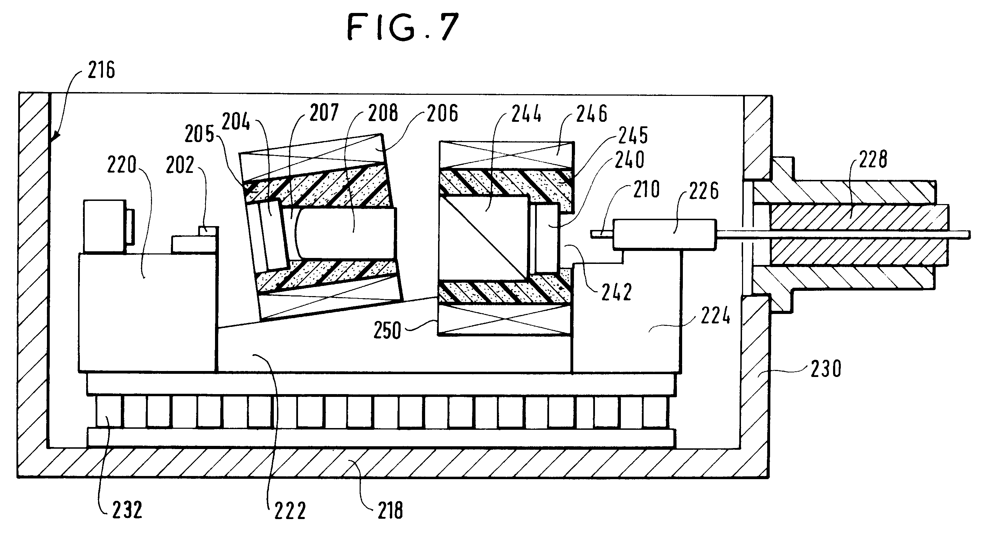

Conformément à la figure 7 cette deuxième tête selon l'invention comporte un boîtier 216 présentant un plancher 218 portant, d'arrière en avant :
- une palette laser 220 pour porter ledit laser 202,
- une palette intermédiaire 222 pour porter un premier bloc intermédiaire comportant ledit premier rotateur 204, 206 et ladite lentille de focalisation 208, et un deuxième bloc intermédiaire comportant ledit polariseur intermédiaire 244 et ledit deuxième rotateur 240, 246,
- et une palette fibre 224 pour porter une extrémité de ladite fibre polariseur 210,
- ledit boîtier présentant en outre une paroi avant 230 portant ladite fibre polariseur à distance de sa dite extrémité.

Dans chacun desdits blocs intermédiaires, ledit rotateur est un rotateur de Faraday constitué d'une lame mince d'un cristal rotateur 204, 240 et d'un aimant permanent 206, 246 de forme tubulaire formant un évidement axial 207, 242 qui s'étend selon ladite direction longitudinale.

La lame mince 204 du premier rotateur est fixée dans une partie arrière d'un manchon 205 prévu dans l'évidement 207 de ce premier rotateur et est disposée en regard du laser 202 avec une obliquité par rapport au faisceau de lumière utile. La lentille de focalisation 208 est fixée dans une partie avant de ce manchon en regard du deuxième bloc intermédiaire. La lame mince 240 du deuxième rotateur est fixée dans une partie avant d'un manchon 245 prévu dans l'évidement 242 de ce deuxième rotateur et est disposée en regard de la fibre polariseur 210 ; le polariseur intermédiaire 244 est un polariseur Banning fixé dans une partie arrière de ce manchon en regard de la lentille de focalisation 208.

L'assemblage s'effectue de la manière suivante, d'abord à l'extérieur du boîtier : la lentille 208 et le cristal rotateur 204 sont brasés dans le manchon 205 qui est lui-même introduit dans l'évidement 207 de l'aimant permanent 206 ; le polariseur 244 et le cristal rotateur 240 sont fixés dans le manchon 245 qui est lui-même introduit dans l'évidement 242 de l'aimant permanent 246.

Le premier bloc intermédiaire est fixé sur la palette intermédiaire 222 et celle-ci est fixée à la palette laser 220 portant le laser 202 après réglage contrôlé par mesure du couplage optique.

Le deuxième bloc intermédiaire est disposé dans une encoche 250 prévue à cet effet sur la palette intermédiaire 222 et est fixé à celle-ci après réglage en rotation autour de son axe, contrôlé par mesure de l'isolation optique obtenue pour une lumière rétrodiffusée en direction du laser.

Par ailleurs, la fibre polariseur 210 est mise à l'intérieur d'un tube 226.

Le réglage puis la fixation du positionnement de la fibre polariseur 210 par rapport à l'ensemble que forment alors les deux blocs intermédiaires et le laser 202 montés sur les palettes 222 et 220 fixées l'une à l'autre s'effectuent ensuite de façon analogue à ceux du positionnement de la fibre polariseur 10 par rapport au bloc intermédiaire et au laser 2 montés sur les palettes 22 et 20 fixées l'une à l'autre dans le cas de la tête optique illustrée à la figure 4.

De même le montage dans le boîtier 216 de l'assemblage ainsi réalisé s'effectue de façon analogue au montage dans le boîtier 16 de l'assemblage obtenu dans le cas de la tête optique illustrée à la figure 4. La fibre polariseur 210, qui n'est entourée du tube 226 que sur une courte longueur située à l'intérieur du boîtier 216, passe ainsi dans un canon de sortie 228 traversant la paroie avant 230 du boîtier 216 et les palettes 220, 222 et 224 sont fixées au plancher 218 par exemple par l'intermédiaire d'un module de régulation thermique 232.

Les avantages des têtes selon l'invention sont les suivants :
- du fait de la limitation du nombre d'éléments intervenant dans le dispositif, le nombre d'interfaces est réduit, diminuant ainsi les retours "internes" liés au réflexions sur les éléments du dispositif.
- Par ailleurs, la présence en premier interface d'un rotateur de Faraday fournit une isolation vis à vis des réflexions sur les interfaces suivants.
- Du point de vue pertes de couplage, la diminution du nombre d'éléments réduit les pertes par absorption interne, ainsi que les risques de pertes additionnelles liées au mésalignement éventuel des pièces.
- L'encombrement est diminué, ce qui permet d'obtenir un dispositif plus compact, paramètre important pour la stabilité mécanique et thermique.

## Revendications

1. Tête optique à isolateur intégré pour le couplage d'un laser semi-conducteur à un guide de lumière qui constitue un guide à coupler et qui est inclus dans un système de télécommunication optique guidée, cette tête comportant :
- un boîtier (16) présentant une direction longitudinale avec un côté avant et un côté arrière,
- ledit laser semi-conducteur (2) disposé dans ce boîtier, pour émettre selon cette direction longitudinale vers l'avant un faisceau de lumière utile ayant un plan de polarisation orienté selon un plan dit plan de polarisation de laser,
- un rotateur de polarisation (4, 6) disposé dans ce boîtier en avant de ce laser pour faire tourner de 45 degrés environ dans un sens le plan de polarisation dudit faisceau de manière à orienter ce plan selon un plan de polarisation de sortie,
- une lentille de focalisation (8) disposée dans ce boîtier en avant de ce laser pour injecter ce faisceau dans l'entrée dudit guide de lumière formant le début dudit guide à coupler,
- et un polariseur disposé entre ledit rotateur et ledit guide à coupler, orienté selon ledit plan de polarisation de sortie de manière à laisser passer ladite lumière utile en provenance dudit laser et à polariser selon ledit plan de polarisation de sortie toute lumière parasite réflèchie vers l'arrière pour que ledit rotateur fasse ensuite tourner le plan de polarisation de cette lumière parasite de 45 degrés environ dans ledit sens et que cette lumière ne parvienne audit laser qu'avec un plan de polarisation sensiblement perpendiculaire audit plan de polarisation de laser,
- cette tête étant caractérisée par le fait que ledit polariseur est un guide polariseur (10) constitué par un tronçon de guide de lumière raccordé audit guide à coupler (14) la lumière étant injectée par ladite lentille dans ledit guide polariseur.

2. Tête selon la revendication 1, caractérisée par le fait que ledit rotateur est un rotateur de Faraday constitué d'une lame mince d'un cristal rotateur (4) et d'un aimant permanent (6) de forme tubulaire formant un évidement axial (7) qui s'étend selon ladite direction longitudinale, cette lame étant fixée dans une partie arrière de cet évidement en regard dudit laser (2) et ladite lentille de focalisation (8) étant fixée dans une partie avant de cet évidement en regard dudit guide polariseur (10).

3. Tête selon la revendication 2, caractérisée par le fait que ledit boîtier (16) présente un plancher (18) portant, d'arrière en avant :
- une palette laser (20) portant ledit laser (2) et présentant une face avant transversale plane,
- une palette intermédiaire (22) portant ledit aimant permanent (6), cette palette présentant une face arrière transversale plane en appui contre ladite face avant de ladite palette laser, et une face avant transversale plane,
- et une palette guide (24) portant une extrémité dudit guide polariseur (10), cette palette présentant une face arrière transversale plane en appui contre ladite face avant de ladite palette intermédiaire, de manière à faciliter le réglage et le maintien des positions relatives desdites palettes,
- ledit boîtier présentant en outre une paroi avant (30) portant ledit guide polariseur à distance de sa dite extrémité.

4. Tête selon la revendication 1, caractérisée par le fait qu'elle comporte en outre :
- un deuxième rotateur (240, 246) disposé dans ledit boîtier (216) entre le rotateur prédédemment mentionné, qui constitue alors un premier rotateur (204, 206), et le polariseur précédemment mentionné, qui constitue alors un polariseur final (210), pour faire tourner à nouveau le plan de polarisation dudit faisceau de 45° degrés environ dans ledit sens de manière à orienter ce plan selon ledit plan de polarisation de sortie,
- et un polarisateur intermédiaire (244) disposé entre lesdits premier et deuxième rotateurs pour laisser passer sélectivement la dite lumière utile sortant dudit premier rotateur.

5. Tête selon la revendication 4, caractérisée par le fait que ledit boîtier (216) présente un plancher (218) portant, d'arrière en avant :
- une palette laser (220) pour porter ledit laser (202),
- une palette intermédiaire (222) pour porter un premier bloc intermédiaire comportant ledit premier rotateur (204, 206) et ladite lentille de focalisation (208), et un deuxième bloc intermédiaire comportant ledit polariseur intermédiaire (244) et ledit deuxième rotateur (240, 246),
- et une palette guide (224) pour porter une extrémité dudit guide polariseur (210),
- ledit boîtier présentant en outre une paroi avant (230) portant ledit guide polariseur à distance de sa dite extrémité.

6. Tête selon la revendication 5, caractérisée par le fait que dans chacun desdits blocs intermédiaires ledit rotateur est un rotateur de Faraday constitué d'une lame mince d'un cristal rotateur (204, 240) et d'un aimant permanent (206, 246) de forme tubulaire formant un évidement axial (207, 242) qui s'étend selon ladite direction longitudinale, ladite lame mince (204) dudit premier rotateur étant fixée dans une partie arrière dudit évidement de ce premier rotateur en regard dudit laser (202) avec une obliquité par rapport audit faisceau de lumière utile et ladite lentille de focalisation (208) étant fixée dans une partie avant de cet évidement en regard dudit deuxième bloc intermédiaire, ladite lame mince (240) dudit deuxième rotateur étant fixée dans une partie avant dudit évidement (242) de ce deuxième rotateur en regard de ladite fibre polariseur (210) et ledit polariseur intermédiaire (244) étant un polariseur Banning fixé dans une partie arrière de cet évidement en regard de ladite lentille de focalisation (208).

## Claims

1. An optical head with an integrated isolator for coupling a semiconductor laser to a light guide constituting a guide to be coupled and included in a guided-light telecommunications system, said head comprising:
a housing (16) having a longitudinal direction with a front end and a rear end;
said semiconductor laser (2) disposed inside said housing in order to emit a beam of useful light forwards along said longitudinal direction, said beam having a plane of polarization oriented along the said plane of polarization of the laser;
a polorization rotator (4, 6) disposed in said housing in front of the laser for rotating the plane of polarization of said beam through about 45° in one direction so as to orient said plane along an outlet plane of polarization;
a focusing lens (8) disposed inside said housing in front of said rotator for injecting said beam into the inlet of said light guide, forming the start of said guide to be coupled and
a polarizer disposed between said lens and said guide to be coupled, oriented along said outlet plane of polarization, thereby allowing said useful light to pass from said laser and polarizing any interfering light reflected in the reverse direction along said outlet plane of polarization so that said rotator causes the plane of polarization of said interfering light then to rotate through about 45° in said direction so that said light reaches said laser with a plane of polarization which is substantially perpendicular to the said plane of polarization of the laser;
said head being characterized by the fact that said polarizer is a polarizing guide (10) constituted by a length of light guide connected to said guide to be coupled (14), the light being injected by said lens into said polarizer guide.

2. A head according to claim 1, characterized by the fact that said rotator is a Faraday rotator constituted by a thin plate of a rotating crystal (4) and by a permanent magnet (6) which is tubular in shape having an axial hole (7) extending along said longitudinal direction, said plate being fixed in a rear portion of said hole facing said laser (2), with said focusing lens (8) being fixed in a front portion of said hole facing said polarizing guide (10).

3. A head according to claim 2, characterized by the fact that said housing (16) has a floor (18) carrying, going from rear to front:
a laser stand (20) carrying said laser (2) and having a transverse front face which is plane;
an intermediate stand (22) carrying said permanent magnet (6), said intermediate stand having a transverse front face which is plane, and a transverse rear face which is plane and which bears against said front face of said laser stand; and
a guide stand (24) carrying one end of said polarizing guide (10), said guide stand having a transverse rear face bearing against said front face of said intermediate stand so as to facilitate adjusting and maintaining the relative positions of said stands;
said housing also having a front wall (30) supporting said polarizing guide at a distance from said one end thereof.

4. A head according to claim 1, characterized by the fact that it further includes:
a second rotator (240, 246) disposed inside said housing (216) between the previously-mentioned rotator which then constitutes a first rotator (204, 206) and the previously- mentioned polarizer which then constitutes a final polarizer (210), said second rotator serving to further rotate the plane of polarization of beam through about 45° in said direction so as to orient the plane of polarization along said outlet plane; and
an intermediate polarizer (244) disposed between said first and second rotators for selectively passing said useful light leaving said first rotator.

5. A head according to claim 4, characterized by the fact that said housing (216) has a floor (218) carrying, from rear to front:
a laser stand (220) for carrying said laser (202);
an intermediate stand (222) for carrying a first intermediate block comprising first rotator (204, 206) and said focusing lens (208), and a second intermediate block comprising said intermediate polarizer (244) and second rotator (240, 246); and
a guide stand (224) for carrying one end of said polarizing guide (210);
said housing also having a front wall (230) supporting said polarizing guide at a distance from said one end thereof.

6. A head according to claim 5, characterized by the fact that in each of said intermediate blocks said rotator is a Faraday rotator constituted by a thin plate of a rotating crystal (204, 240) and a tubular permanent magnet (206, 246) having an axial hole (207, 242) extending along said longitudinal direction, said thin plate (204) of said first rotator being fixed in a rear portion of said hole in said first rotator facing said laser (202) and sloping relative to said useful light beam, with said focusing lens (202) being fixed in a front portion of said hole facing said second intermediate block, said thin plate (240) of said second rotator being fixed in a front portion of said hole (240) of said second rotator facing said polarizing fiber (210), and said intermediate polarizer (244) being a Banning polarizer fixed in a rear portion of said hole facing said focusing lens (208).

## Patentansprüche

1. Optischer Kopf mit integriertem Isolator zum Ankoppeln eines Halbleiterlasers an einen Lichtleiter, der einen anzukoppelnden Lichtleiter bildet und Teil eines Fernmeldesystems mit Lichtleitern ist, wobei der Kopf aufweist:
- ein Gehäuse (16), das eine Längsrichtung mit einer Vorderseite und einer Hinterseite besitzt,
- den Halbleiterlaser (2), der in dem Gehäuse angeordnet ist, um ein Nutzlichtstrahlbündel in Längsrichtung nach vorne auszusenden, wobei das Bündel eine Polarisationsebene besitzt, die gemäß einer Ebene, Laserpolarisationsebene genannt, ausgerichtet ist,
- einen Polarisationsrotator (4, 6), der in dem Gehäuse vor dem Laser angeordnet ist, um die Polarisationsebene des Bündels um etwa 45° in eine Richtung zu drehen, so daß die Ebene in einer Austrittspolarisationsebene orientiert wird,
- eine Fokussierungslinse (8), die in dem Gehäuse vor dem Laser angeordnet ist, um das Strahlenbündel in den Eingang des Lichtleiters einzugeben, der den Anfang des anzukoppelnden Lichtleiters bildet,
- und einen Polarisator, der zwischen dem Rotator und dem in Richtung der Austrittspolarisationsebene orientierten anzukoppelnden Lichtleiter angeordnet ist, derart, daß er das vom Laser kommende Nutzlicht durchläßt und das gesamte nach hinten reflektierte Störlicht gemäß der Austrittspolarisationsebene polarisiert, damit der Rotator anschließend die Polarisationsebene dieses Störlichts um etwa 45° in die genannte Richtung dreht, und damit dieses Licht am Laser nur mit einer Polarisationsebene ankommt, die im wesentlichen senkrecht zur Laserpolarisationsebene verläuft,
- wobei dieser optische Kopf dadurch gekennzeichnet ist, daß der Polarisator ein polarisierender Lichtleiter (10) ist, der aus einem Lichtwellenleiterstück besteht, das an den anzukoppelnden Lichtleiter (14) angeschlossen ist, wobei das Licht durch die Linse in den polarisierenden Lichtleiter eingegeben wird.

2. Kopf nach Anspruch 1, dadurch gekennzeichnet, daß der Rotator ein Faraday-Rotator ist, der aus einem dünnen Plättchen eines Rotatorkristalls (4) und einem rohrförmigen Permanentmagneten (6) besteht, der eine axiale Aussparung (7) bildet, die sich in der genannten Längsrichtung erstreckt, wobei sich das Plättchen in einem hinteren Abschnitt der Aussparung gegenüber dem Laser (2) befestigt ist, während die Fokussierungslinse (8) in einem vorderen Abschnitt dieser Aussparung gegenüber dem polarisierenden Lichtleiter (10) befestigt ist.

3. Kopf nach Anspruch 2, dadurch gekennzeichnet, daß das Gehäuse (16) einen Boden (18) besitzt, der von hinten nach vorne trägt:
- eine Laserpalette (20), die den Laser (2) trägt und eine quer verlaufende ebene Vorderseite besitzt,
- eine Zwischenpalette (22), die den Permanentmagneten (6) trägt, wobei die Palette eine quer verlaufende ebene Hinterseite, die gegen die Vorderseite der Laserpalette anliegt, und eine quer verlaufende ebene Vorderseite besitzt,
- und eine Lichtleiterpalette (24), die ein Ende des polarisierenden Lichtleiters (10) trägt, wobei diese Palette eine gegen die Vorderseite der Zwischenpalette anliegende quer verlaufende ebene Hinterseite besitzt, so daß das Einstellen und das Einhalten der relativen Positionen der Paletten erleichtert wird,
- wobei das Gehäuse weiter eine Vorderwand (30) besitzt, die den polarisierenden Lichtleiter in einem Abstand von seinem Ende trägt.

4. Kopf nach Anspruch 1, dadurch gekennzeichnet, daß er weiter aufweist:
- einen zweiten Rotator (240, 246), der im Gehäuse (216) zwischen dem zuvor erwähnten Rotator, der dann einer ersten Rotator (204, 206) bildet, und dem zuvor erwähnten Polarisator, der dann einen Ausgangspolarisator (210) bildet, angeordnet ist, um erneut die Polarisationsebene des Strahlenbündels um etwa 45° in die genannte Richtung zu drehen, so daß diese Ebene in die Austrittspolaristionsebene ausgerichtet wird,
- und einen Zwischenpolarisator (244), der zwischen dem ersten und dem zweiten Rotator angeordnet ist, um selektiv das aus dem ersten Rotator austretende Nutzlicht durchzulassen.

5. Kopf nach Anspruch 4, dadurch gekennzeichnet, daß das Gehäuse (216) einen Boden (218) besitzt, der von hinten nach vorne trägt:
- eine Laserpalette (220) zum Tragen des Lasers (202),
- eine Zwischenpalette (222) für einen ersten Zwischenblock, der den ersten Rotator (204, 206) und die Fokussierungslinse (208) enthält, und einen zweiten Zwischenblock, der den Zwischenpolarisator (244) und den zweiten Rotator (240, 246) enthält,
- und eine Lichtleiterpalette (224) für ein Ende des polarisierenden Lichtleiters (210),
- wobei das Gehäuse weiter eine Vorderwand (230) besitzt, die den polarisierenden Lichtleiter im Abstand von seinem Ende trägt.

6. Kopf nach Anspruch 5, dadurch gekennzeichnet, daß in jedem der Zwischenblöcke der Rotator ein Faraday-Rotator ist, der aus einem dünnen Plättchen eines Rotatorkristalls (204, 240) und einem rohrförmigen Permanentmagneten (206, 246) besteht, der eine axiale Ausnehmung (207, 242) bildet, die sich in der genannten Längsrichtung erstreckt, wobei das dünne Plättchen (204) des ersten Rotators in einem hinteren Abschnitt der Ausnehmung des ersten Rotators gegenüber dem Laser (202) befestigt ist, mit einer relativ zum Nutzlichtbündel verlaufenden Schräglage, während die Fokussierungslinse (208) in einem vorderen Abschnitt der Aussparung gegenüber dem zweiten Zwischenblock befestigt ist, wobei das dünne Plättchen (240) des zweiten Rotators in einem vorderen Abschnitt der Ausnehmung (242) des zweiten Rotators gegenüber der polarisierenden Lichtleitfaser (210) befestigt ist, während der Zwischenpolarisator (244) ein Banning-Polarisator ist, der in einem hinteren Abschnitt der Ausnehmung gegenüber der Fokussierungslinse (208) befestigt ist.
